(19) Europäisches Patentamt
European Patent Office
Office européen des brevets

(11) Publication number : **0 640 635 A1**

(12) **EUROPEAN PATENT APPLICATION**

(21) Application number : **94202370.6**

(22) Date of filing : **19.08.94**

(51) Int. Cl.$^6$ : **C08G 59/14,** C08G 59/06, C08G 59/12

(30) Priority : **20.08.93 JP 226714/93**

(43) Date of publication of application :
**01.03.95 Bulletin 95/09**

(84) Designated Contracting States :
**AT BE CH DE ES FR GB IT LI NL SE**

(71) Applicant : **SHELL INTERNATIONALE RESEARCH MAATSCHAPPIJ B.V.**
**Carel van Bylandtlaan 30**
**NL-2596 HR Den Haag (NL)**

(72) Inventor : **Imura, Tetsuro c/o Yuka Shell Epoxy KK Dept. ADMP**
**Nishiazabu Mitsui Bldg,**
**17-30 Nishiazabu 4-chome**
**Minato-ku, Tokyo 106 (JP)**
Inventor : **Murata,Yasuyuki c/o Yuka Shell Epoxy KK Dept. ADMP**
**Nishiazabu Mitsui Bldg,**
**17-30 Nishiazabu 4-chome**
**Minato-ku, Tokyo 106 (JP)**
Inventor : **Nakanishi, Yoshinori Yuka Shell Epoxy KK Dept ADMP**
**Nishiazabu Mitsui Bldg,**
**17-30 Nishiazabu 4-chome**
**Minato-ku, Tokyo 106 (JP)**

(54) **Liquid epoxy resin composition.**

(57) An epoxy resin obtainable by reacting at least the following components :
(a) 100 parts by weight of a crystalline epoxy resin, (b) of from 3 to 20 parts by weight of a compound having two or more phenolic hydroxyl groups and/or carboxyl groups in one molecule and (c) of from 3 to 20 parts by weight of a compound having one phenolic hydroxyl group or carboxyl group in one molecule.

EP 0 640 635 A1

The present invention relates to an epoxy resin, an epoxy resin composition, to a curable composition comprising said epoxy resin or said epoxy resin composition, to the use of such a curable composition and to articles comprising said curable composition when it has been cured. The epoxy resin and the epoxy resin composition according to the present invention have a low viscosity and are relatively stable liquids at low temperatures and articles comprising the curable epoxy resin composition according to the present invention in the cured state have an excellent combination of high glass transition point (Tg) and low water absorption. The epoxy resin according to the present invention is especially useful in adhesives, casting compositions, sealants, moulding compositions and laminating compositions.

The conventional liquid epoxy resins such as bisphenol A-type epoxy resins or bisphenol F-type epoxy resins used in adhesives, casting compositions, sealants, laminating compositions, moulding compositions and coatings, often do not provide the desired level of heat resistance and water resistance for said application areas.

Multifunctional epoxy resins such as novolak-type epoxy resins, tri-functional epoxy resins and tetra-functional epoxy resins though having improved heat resistance, either have an extremely high viscosity or are solid at room temperature, so that they cannot be processed as liquids.

Other known liquid epoxy resins derived from amine compounds such as aminophenols and xylenediamines have excellent heat resistance and have a low viscosity but poor water resistance.

Epoxy resins with a rigid skeleton such as, for example, biphenol X-type epoxy resins, bisphenol S-type epoxy resins and hydroquinone-type epoxy resins, have excellent heat resistance and though having a low molecular weight (because of their rigid skeletons) their crystallization tendency is strong so that they often crystallize at room temperature as a result whereof it is difficult to process them as liquids.

Japanese Patent Application publication No. 4-211420 discloses a method of reacting a liquid epoxy resin and an unsaturated monocarboxylic acid in order to prevent crystallization of the liquid epoxy resin. However, the tendency to crystallize of the resulting modified epoxy resins is still too high and simply raising the degree of modification of the epoxy resin by increasing the amount of the unsaturated carboxylic acid used in the modification process in order to decrease the crystallization tendency, results in a further decrease of the number of the functional groups in the epoxy resin which negatively affects the physical properties such as, for example, heat resistance and water resistance of an article containing the thus modified epoxy resin in the cured state.

Japanese Patent Application Publication No. 3-14816 discloses a method of reducing the crystallization tendency of biphenol-type epoxy resins, by reacting a biphenol-type epoxy resin with a polyphenol. In this method, however, the molecular weight of a biphenol-type epoxy resin is increased so that an amorphous solid is obtained with a low softening point and a high viscosity in order to facilitate the transfer moulding of the modified resin. Clearly by this method a liquid resin composition with a low viscosity is not obtained.

The present invention aims at providing an epoxy resin that has a low viscosity and is a stable liquid at low temperature and which provides excellent heat resistance and water resistance to articles comprising said epoxy resin in the cured state.

The present invention thus provides an epoxy resin obtainable by reacting at least the following components: (a) 100 parts by weight of a crystalline epoxy resin, (b) of from 3 to 20 parts by weight of a compound having two or more phenolic hydroxyl groups and/or carboxyl groups in one molecule and (c) of from 3 to 20 parts by weight of a compound having one phenolic hydroxyl group or carboxyl group in one molecule.

It was found that the epoxy resin of the present invention has reduced crystallization tendency while having low viscosity and good liquid stability at low temperatures.

The term crystalline, as used throughout the specification, should be interpreted as essentially crystalline, which means that the crystalline epoxy resin may to a certain extent say at most up to 50% by weight be in the amorphous phase.

It is preferred that the crystalline epoxy resin is for at least 75% by weight more preferably for at least 85% by weight in the crystalline phase.

The crystalline epoxy resin present in component (a), is an epoxy resin which has a melting point of not lower than room temperature, i.e. lower than about 30 °C temperature and which crystallizes upon solidification i.e. at a temperature higher than 30 °C.

Such crystalline epoxy resins include, for example, biphenol-type epoxy resins, bisphenol S-type epoxy resins, hydroquinone-type epoxy resins and dihydroxynaphthalene-type epoxy resins. Preferred are biphenol-type epoxy resins of the following general formula:

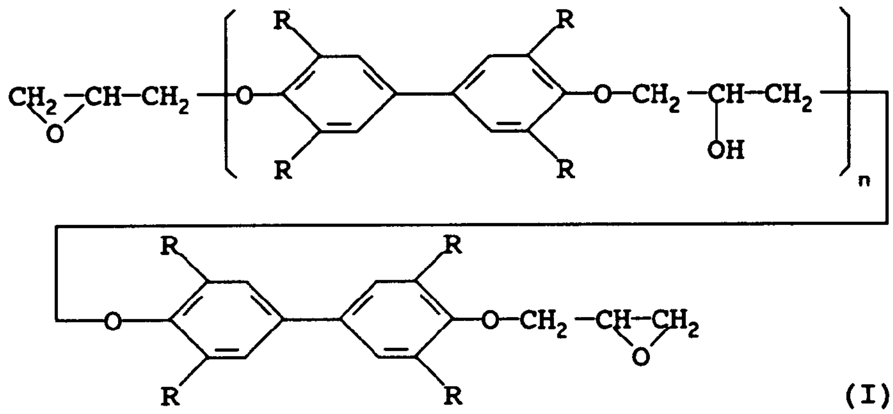

(I)

where R represents a hydrogen atom, an alkyl group having from 1 to 10 carbon atoms, a phenyl group or a halogen atom, and R's may be same as or different from each other; and n is on average a number of from 0 to 2.

Suitable components (b) are for example: phenols such as hydroquinone, catechol, resorcinol, dihydroxynaphthalene, bisphenol A, bisphenol F, bisphenol S, tetrabromobisphenol A, biphenol, tetramethylbiphenol, phenol-novolak resins, cresol-novolak resins, bisphenol A-novolak resins, dicyclopentadienephenol resins, terpene-phenol resins, naphthol-novolak resins and phenol-aralkyl resins; polyphenolic resins obtainable by condensation of the phenols mentioned above and aldehydes such as hydroxybenzaldehyde, crotonaldehyde and glyoxal; polycarboxylic acids such as phthalic acid, terephthalic acid, isophthalic acid, methylphthalic acid, trimellitic acid, pyromellitic acid, naphthalene-dicarboxylic acid, hydrogenated compounds of these aromatic carboxylic acids, nadic acid, methylnadic acid, oxalic acid, malonic acid, succinic acid, glutaric acid, adipic acid, pimelic acid, suberic acid, azelaic acid, sebacic acid, maleic acid, fumaric acid, maleinated fatty acids and dimer acids; and various compounds having phenolic hydroxyl group(s) and carboxyl group(s) in one molecule such as, for example, hydroxybenzoic acid, dihydroxybenzoic acid and hydroxynaphthalene-carboxylic acids; or mixtures of two or more of the above-mentioned compounds.

If the amount of the component (b) used is too small the liquid stability of the epoxy resin composition according to the invention will become too low. On the contrary, if the amount used is too high, the viscosity of the epoxy resin according to the present invention will become too high which has a negative effect on the handlability of the composition.

Suitable components (c) include: monophenols such as phenol, cresol, xylenol, ethylphenol, propylphenol, butylphenol, nonylphenol, phenylphenol, cumylphenol, chlorophenol, tribromophenol and naphthol; monocarboxylic acids such as formic acid, acetic acid, propionic acid, butyric acid, valeric acid, pivalic acid, lauric acid, stearic acid, acrylic acid, methacrylic acid, crotonic acid, benzoic acid, toluic acid, cinnamic acid and naphthoic acid; or mixtures of two or more of the above-mentioned compounds.

If the amount of component (c) used is too small the liquid stability of the epoxy resin according to the present invention will become too low. On the contrary, by using a too high amount the average number of the epoxy groups per molecule is reduced which has a negative effect on the physical properties of the cured resin.

Preferred epoxy resins according to the present invention are obtainable by reacting at least the following components (a) 100 parts by weight of a crystalline epoxy resin, (b) of from 4 to 10 parts by weight of a compound having two or more phenolic hydroxyl groups and/or carboxyl groups in one molecule and (c) of from 5 to 10 parts by weight of a compound having one phenolic hydroxyl group or carboxyl group in one molecule.

The reaction of components (a), (b) and (c) can be carried out according to any method known in the art. A suitable process consists of melting the components, followed by mixing and reacting them for 1 to 10 hours at a temperature of from 100 to 200 °C in the presence of a catalyst.

Suitable catalysts are imidazoles such as 2-methylimidazole and 2-ethyl-4-methylimidazole; amines such as 2,4,6-tris(dimethylaminomethyl)phenol and benzyldimethylamine; quaternary ammonium salts such as tetramethylammonium chloride, tetramethylammonium hydroxide and benzyltrimethylammonium bromide; phosphines such as tributylphosphine, triphenylphosphine and tris(dimethoxyphenyl)phosphine; phosphonium salts such as ethyltriphenylphosphonium iodide, ethyltriphenylphosphonium chloride and tetrabutylphosphonium bromide; alkali metal hydroxides such as sodium hydroxide and potassium hydroxide and alkali metal salts such as sodium hydrogen carbonate and lithium chloride. The amount of catalyst used generally lies in the range of from 50 to 1000 ppm based on the weight of component (a) to be reacted.

The process may be modified by either reacting component (a) with both components (b) and (c) or by

first reacting component (a) with component (b) or (c) followed by reacting the resulting reaction product with the remaining component.

Inert organic solvents may optionally be used in the process such as, for example: alcohols such as ethanol and isopropanol; ketones such as acetone, methyl ethyl ketone and methyl isobutyl ketone; aromatic compounds such as benzene, toluene and xylene; ethers such as dioxane and ethyleneglycol dimethylether; glycol ethers such as ethyleneglycol monomethylether, ethyleneglycol monoethylether and propyleneglycol monomethylether; and aprotonic polar solvents such as dimethylsulfoxide and dimethylformamide.

Component (a) preferably comprises only a crystalline epoxy resin. However, if desired it may contain, in addition to the crystalline epoxy resin, other, non-crystalline epoxy resins, provided the amount of crystalline epoxy resin in component (a) is at least 50% by weight, based on the total weight of component (a). If the proportion of epoxy resins other than crystalline epoxy resins in component (a) is too high, articles containing the curable composition of the invention that has been cured do not show the desired level of physical properties.

In order to further improve the liquid stability or to further lower the viscosity of the epoxy resin according to the invention the latter may be blended with any other suitable epoxy resin.

Such other epoxy resins include, for example: epoxy resins that are reaction products of various phenolic compounds or amines or carboxylic acids with epihalohydrin. Suitable phenolic compounds are for example: bisphenol A, bisphenol F, bisphenol AD, resorcinol, methylresorcinol, dihydroxynaphthalene, phenol-novolak resins, cresol-novolak resins, bisphenol A-novolak resins, dicyclopentadiene-phenol resins, terpene-phenol resins, phenol-aralkyl resins, naphthol-novolak resins, polyphenolic resins obtainable by condensation of the above-mentioned phenols with aldehydes such as hydroxybenzaldehyde, crotonaldehyde and glyoxal and epihalohydrins. Suitable amines are for example diaminodiphenylmethane, aminophenol and xylenediamine. And, suitable carboxylic acids are methylhexahydroxyphthalic acid and dimer acids.

Of the above "other" epoxy resins, preferred are liquid bisphenol-type epoxy resins produced from bisphenol A, bisphenol F and bisphenol AD, since they do not negatively affect the viscosity of the composition nor the physical properties of articles containing the cured composition.

These other epoxy resins may be blended with the epoxy resin of the present invention in amounts of preferably from 20 to 300 parts by weight per 100 parts by weight of the liquid epoxy resin composition according to the invention.

A higher proportion of the other epoxy resin in the blend would negatively affect the physical properties of articles containing the cured composition.

The present invention thus in addition provides a curable epoxy resin composition, obtainable by mixing the epoxy resin or the epoxy resin composition of the invention with an epoxy resin curing compound.

Suitable curing compounds are: various phenol resins such as phenol-novolak resins, cresol-novolak resins, bisphenol A-novolak resins, dicyclopentadiene-phenol resins, phenol-aralkyl resins and terpene-phenol resins; as well as polyphenolic resins obtainable by condensation of the above-mentioned various phenols and various aldehydes such as hydroxybenzaldehyde and crotonaldehyde, glyoxal; acid anhydrides such as methyltetrahydrophthalic anhydride, hexahydrophthalic anhydride, pyromellitic anhydride and methylnadic anhydride; and amines such as diethylenetriamine, isophoronediamine, diaminodiphenylmethane and diaminodiphenylsulfone.

If desired the curable epoxy resin composition of the present invention may also contain various additives, commonly used in curable epoxy resin compositions. Such additives include, for example, cure accelerators, fillers, coupling agents, flame retardants, plasticizers, solvents, reactive diluents and pigments.

Suitable cure accelerators are for example, imidazoles such as 2-methylimidazole and 2-ethyl-4-methylimidazole; amines such as 2,4,6-tris(dimethylaminomethyl)phenol and benzyldimethylamine; and organic phosphorus compounds such as tributylphosphine, triphenylphosphine and tris(dimethoxyphenyl)phosphine.

Suitable fillers include, for example, fused silica, crystalline silica, glass powder, alumina and calcium carbonate.

Suitable flame retardants include for example, antimony trioxide and phosphoric acid.

Flame retardancy may also be imparted to the curable epoxy resin composition of the invention by blending the composition of the invention with a brominated epoxy resin such as the brominated epoxy resins mentioned amongst the list of other epoxy resins presented above.

The curable epoxy resin compositions of the present invention may in particular be used as adhesives, casting compositions, sealants, moulding compositions and laminating compositions.

The invention is illustrated by means of the following Examples.

Examples 1 to 6 and Comparative Examples 1 to 4

Crystalline epoxy resins (a) used in the Examples are:

an epoxy resin derived from 3,3',5,5'-tetramethylbiphenol having an epoxy equivalent weight of 186 g and a melting point of 108 °C (EPIKOTE YX4000, a commercial product from Yuka Shell Epoxy K.K.) or a mixture of an epoxy resin derived from 3,3'5,5'-tetramethylbiphenol and an epoxy resin derived from biphenol having an epoxy equivalent weight of 172 g and a melting point of 128 °C (EPIKOTE YL6121, a commercial product from Yuka Shell Epoxy K.K.). EPIKOTE is a tradename.

Components (b) used in the Examples are: bisphenol A, bisphenol F, succinic acid or p-hydroxybenzoic acid and;

Components (c) used in the Examples are: nonylphenol or lauric acid.

Components (a), (b) and (c) were charged to a 3000-ml three-neck flask equipped with a thermometer, a stirrer and a condenser tube, in amounts as indicated in Table 1. The mixture was heated to 130 °C. When the reactants had dissolved uniformly, 0.5 g of an aqueous 50 wt.% tetramethylammonium chloride solution was added and during this addition, the reactants were gradually heated up to 165 °C and kept at 165 °C for a further 3 hours.

The reaction products obtained in Examples 1 and 5 and in Comparative Examples 1 and 2, were modified liquid epoxy resin compositions.

In Examples 2, 3, 4 and 6, a liquid epoxy resin derived from bisphenol F having an epoxy equivalent of 170 (EPIKOTE 807, a commercial product obtained from Yuka Shell Epoxy K.K.) was added to and mixed with the reaction product in the amount as indicated in Table 1.

The epoxy equivalent, the viscosity at 50 °C and the liquid stability of each of these modified liquid epoxy resin compositions were measured whereof the data are shown in Table 1.

In Comparative Examples 3 and 4, use is made of a liquid epoxy resin derived from bisphenol A (EPIKOTE 828, a commercial product obtained from Yuka Shell Epoxy K.K.) and of a 1:1 mixture of EPIKOTE 828 and EPIKOTE YX4000.

Examples 7 to 12 and Comparative Examples 5 to 8

Curable epoxy resin compositions as shown in Table 2 were prepared using the epoxy resin compositions of Examples 1 to 6 or of Comparative Examples 1 to 4 as epoxy resin and methyltetrahydrophthalic anhydride as curing compound and 2-methylimidazole as accelerator. After defoaming of the composition a mould was cast that was cured at 150 °C for 5 hours. The glass transition point and the water absorption of the cured casting were measured whereof data are shown in Table 2.

From Table 1 it follows that an epoxy resin composition prepared without component (c) has an extremely low viscosity and poor liquid stability (Comparative Example 1) and that an epoxy resin composition prepared without component (b) has an extremely poor liquid stability (Comparative Example 2) and that the epoxy resin composition of Comparative Example 4, wherein the 1:1 mixture comprising EPIKOTE 828 and EPIKOTE YX4000 was used has an extremely poor liquid stability.

From Table 2, it follows that the cured castings containing a curable liquid epoxy resin composition according to the invention all have a high glass transition point and low water absorption.

Table 1

| | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 |
|---|---|---|---|---|---|---|---|---|---|---|
| Conditions for Modifying Epoxy Resin | | | | | | | | | | |
| (a) Crystalline epoxy resin | A | A | A | B | A | B | A | A | (I) | (J) |
| Amount used (g) | 1000 | 1000 | 1000 | 1000 | 1000 | 1000 | 1000 | 1000 | | |
| (b) Compound having two or more phenolic hydroxyl groups and/or carboxyl groups in one molecule | C | C | D | D | E | F | C | - | | |
| Amount used (g) | 50 | 70 | 100 | 100 | 40 | 70 | 150 | 0 | | |
| (c) Compound having one phenolic hydroxyl group and carboxyl group in one molecule | H | G | G | H | H | G | - | G | | |
| Amount used (g) | 100 | 50 | 50 | 100 | 80 | 70 | 0 | 100 | | |
| Amount of bisphenol F-derived liquid epoxy resin used (g) | 0 | 500 | 700 | 700 | 0 | 500 | 0 | 0 | | |
| Results of Analyses | | | | | | | | | | |
| Epoxy equivalent weight (g) | 226 | 219 | 225 | 217 | 287 | 224 | 262 | 223 | 186 | 186 |
| Viscosity (pa.s) at 50 °C | 76 | 37 | 28 | 21 | 42 | 30 | 289 | 23 | 9 | 15 |
| Liquid stability* (days) | 7 | 8 | 9 | 9 | 8 | 8 | 4 | 2 | 8 | 1 |

Notes to Table 1:

- A is an epoxy resin derived from tetramethylbiphenol having an epoxy equivalent weight of 186 g and a melting point of 108 °C (EPIKOTE YX4000, a commercial product from Yuka Shell Epoxy K.K.).
- B is a mixture of an epoxy resin derived from tetramethylbiphenol having an epoxy equivalent weight of 172 g and a melting point of 128 °C and an epoxy resin derived from biphenol (EPIKOTE YL6121, a commercial product from Yuka Shell Epoxy K.K.).
- C is Bisphenol A.
- D is Bisphenol F.
- E is Succinic acid.
- F is P-hydroxybenzoic acid.
- G is Nonylphenol.
- H is Lauric acid.
- I is a liquid epoxy resin derived from bisphenol A (EPIKOTE 828 a commercial product from Yuka Shell Epoxy K.K.).
- J is a 1:1 mixture of E828 and YX4000.
- Liquid stability* was determined as follows: 20 g of a test sample of the liquid epoxy resin, 2 g of ethanol and 20 g of calcium carbonate powder were mixed and stored at 5 °C. The days before the liquid epoxy resin crystallized and lost its fluidity were subsequently determined.

Table 2

| | Ex. 7 | Ex. 8 | Ex. 9 | Ex. 10 | Ex. 11 | Ex. 12 | Comp. Ex. 5 | Comp. Ex. 6 | Comp. Ex. 7 | Comp. Ex. 8 |
|---|---|---|---|---|---|---|---|---|---|---|
| Composition | | | | | | | | | | |
| Modified liquid epoxy resin composition | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 |
| Amount added (pbw) | 100 | 100 | 100 | 100 | 100 | 100 | 100 | 100 | 100 | 100 |
| Amount of methyltetrahydrophthalic anhydride added (pbw) | 66 | 68 | 66 | 69 | 57 | 66 | 52 | 66 | 80 | 80 |
| Amount of 2-methylimidazole added (pbw) | 1 | 1 | 1 | 1 | 1 | 1 | 1 | 1 | 1 | 1 |
| Physical properties of cured castings | | | | | | | | | | |
| Glass transition point (°C) | 163 | 165 | 163 | 160 | 163 | 162 | 165 | 158 | 147 | 161 |
| Water absorption* (%) | 0.53 | 0.58 | 0.59 | 0.60 | 0.54 | 0.59 | 0.56 | 0.54 | 0.74 | 0.63 |

Water absorption* was determined by immersing the cured casting in water of 100 °C for 100 hours, followed by measuring the water absorption of the immersed casting sample.

## Claims

1. An epoxy resin obtainable by reacting at least the following components:
(a) 100 parts by weight of a crystalline epoxy resin, (b) of from 3 to 20 parts by weight of a compound having two or more phenolic hydroxyl groups and/or carboxyl groups in one molecule and (c) of from 3 to 20 parts by weight of a compound having one phenolic hydroxyl group or carboxyl group in one molecule.

2. An epoxy resin as claimed in claim 1, in which the crystalline epoxy resin is a biphenol-type epoxy resin of a general formula (I)

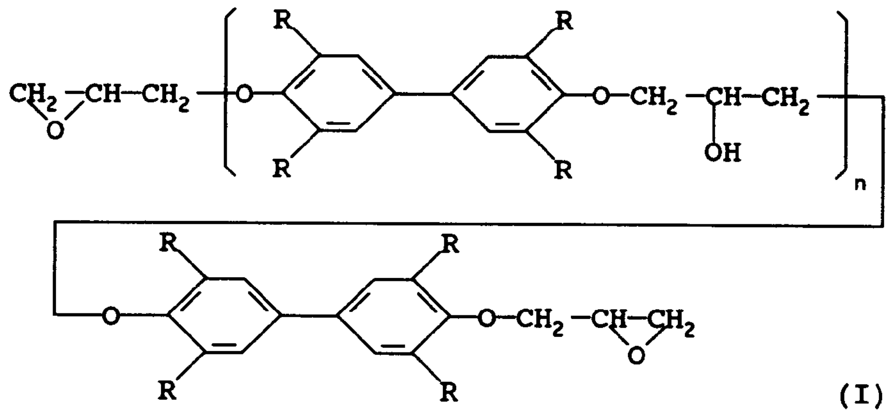

(I)

wherein each R may individually be a hydrogen atom, an alkyl group having from 1 to 10 carbon atoms, a phenyl group or a halogen atom and n is on average a number of from 0 to 2.

3. An epoxy resin composition comprising 100 parts by weight of an epoxy resin as claimed in claim 1 or 2 and from 20 to 300 parts by weight of a liquid bisphenol-type epoxy resin.

4. A curable epoxy resin composition obtainable by mixing an epoxy resin as claimed in claims 1 or 2 or an epoxy resin composition as claimed in claim 3 with an epoxy resin curing compound.

5. Use of a curable epoxy resin composition as claimed in claim 4 in a formulation for adhesives, castings, sealants, laminates and mouldings.

6. Articles comprising a curable epoxy resin composition as claimed in claim 4 that has been cured.

7. A process for the preparation of an epoxy resin by reacting (a) 100 parts by weight of a crystalline epoxy resin, (b) from 3 to 20 parts by weight of a compound having two or more phenolic hydroxyl groups and/or carboxyl groups in one molecule and (c) from 3 to 20 parts by weight of a compound having one phenolic hydroxyl group or carboxyl group in one molecule at elevated temperature.

European Patent Office

# EUROPEAN SEARCH REPORT

Application Number
EP 94 20 2370

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DATABASE WPI<br>Derwent Publications Ltd., London, GB;<br>AN 74-62101V<br>& JP-A-49 045 993 (ASAHI ELECTROCHEM IND)<br>* abstract * | 1-7 | C08G59/14<br>C08G59/06<br>C08G59/12 |
| Y | CH-A-473 143 (CIBA)<br>* column 5, line 24 - line 28; claims; example 2 * | 1-7 | |
| Y | US-A-3 424 721 (P. KLEINSCHMIDT, E.A.)<br>* column 3, line 58 - column 4, line 70; claims; example VI * | 1-7 | |
| Y | DE-A-16 20 394 (SIEMENS)<br>* claims * | 1-7 | |
| A | EP-A-0 160 622 (CIBA-GEIGY)<br>* claims * | 1 | |
| A | US-A-3 247 136 (J. WYNSTRA, E.A.)<br>* claims * | 1 | TECHNICAL FIELDS SEARCHED (Int.Cl.6) |
| A | US-A-4 855 385 (M.B. CAVITT)<br>* claims * | 1 | C08G |

The present search report has been drawn up for all claims

| Place of search | Date of completion of the search | Examiner |
|---|---|---|
| THE HAGUE | 23 December 1994 | Deraedt, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)